# EUROPEAN PATENT SPECIFICATION

(11) **EP 2 352 380 B1**
(45) Date of publication and mention of the grant of the patent: **27.05.2015**
(21) Application number: 09744141.4
(22) Date of filing: 29.10.2009
(51) Int. Cl.: A22C 17/00, A22C 18/00, A22C 7/00

(54) **A PROCESS FOR LARGE-SCALE AUTOMATED PRODUCTION OF FROZEN THIN KEBAB SLICES**
VERFAHREN ZUR AUTOMATISIERTEN MASSENHERSTELLUNG VON GEFRORENEN DÜNNEN KEBABSCHEIBEN
PROCÉDÉ DE PRODUCTION AUTOMATISÉE À GRANDE ÉCHELLE DE FINES TRANCHES DE VIANDE DE KÉBAB CONGELÉES

(30) Priority: 31.10.2008 SE 0802326
(43) Date of publication of application: 10.08.2011
(73) Proprietor: Kebco Kebab Company Ab, 176 77 Järfälla (SE)
(72) Inventor: TULUNAY, Önder, S-176 77 Järfälla (SE)
(74) Representative: Groth & Co. KB
(86) International application number: PCT/EP2009/064283
(87) International publication number: WO 2010/049484

(56) References cited:
- EP-A1- 1 541 029
- DE-A1- 10 303 151
- DE-A1- 19 636 749
- DE-U1-202007 001 140
- IE-A2- 20 030 903

## Description

### Field of the Invention

The present invention relates to a process for large-scale automated production of frozen kebab slices. In such a process a meat mixture is fed into a meat grinder which pumps the meat mixture through a plurality of small holes. The long meat cylinders which are obtained are thereafter pressed into thin kebab slices which are grilled, have excess fat removed, they are sliced into short, thin and narrow kebab slices. The kebab slices are chilled and packed either in a vacuum or modified atmosphere. Finally the packaged kebab slices pass a metal detector and then the package is control weighed.

### Background of the Invention

Short (4 - 20 cm), thin (0.5 - 1.9 mm) and narrow (2 - 5 cm) kebab slices are normally produced by placing a large cylindrical kebab block, which weighs 10-100 kg, in an apparatus which both rotates and grills the kebab block. The grilled meat is sliced, either with a large or an electric knife. Patent document IE 20030903 A2 relates to a process and an apparatus for producing a large kebab block. The kebab block can then be placed in a machine such as, for example, that described in patent document EP 0217612 A1 wherein the machine rotates and grills the meat mixture. Patent document GB 2346798 A relates to electric knives which are used to slice the grilled kebab block to produce short, thin, and narrow kebab slices.

DE 20 2007 001140 U1 discloses a separating unit wherein a mixture of minced meat and solid pieces of meat is pressed against a sieve by means of a cylinder and thereby separated.

There are numerous disadvantages with producing kebab slices according to the previously-known technique. Perhaps the greatest disadvantage is that only a limited number of kebab slices can be produced hourly since one is dependent upon the meat grilling and rotating at a certain speed. The grilling can not be sped up since excessively high temperatures can burn the meat and can even harm the person carving the kebab meat. The kebab meat which is produced suffices for supplying a kiosk, restaurant or pizzeria but is inadequate for large scale production over 600-1000 kg per hour with a production capacity of over 5000-8000 kg per day. A large scale and fast production would be of interest for kebab producers who could then distribute and sell kebab meat to kiosks, restaurants and pizzerias which lack the capability or desire to produce kebab slices themselves.

Another disadvantage is that electric kebab knives have a short life span and must be frequently sharpened in order to retain a high slicing capacity. This results in the need to dedicate time to knife maintenance and resources to frequent knife replacement. Their life span is shortened even faster if they are not cleaned every evening, which is also a time-consuming process. Alternatively, dull knives lead to poorly-carved kebab slices which are not appreciated by customers who expect a high quality product.

Yet another disadvantage is that certain kebab restaurants, kiosks and pizzerias do not clean electric knives often or carefully enough which can lead to a obvious risk for build-up of microbial colonies in the knife. Such colonies can then spread to all products the knife is in contact with. This is in addition to the fact that the traditional, non-automated, process always involves the risk that the meat can be contaminated by the person who cuts the kebab, in the event they for example cough on or otherwise comes in contact with the meat.

A further disadvantage is that it is strenuous to slice kebab according to the conventional process. This can give rise to repetitive injuries in joints. It is also often uncomfortable to work beside the high temperatures which are present in front of the grill.

Yet another disadvantage is that the rotating and grilling process is not sensitive to variations in product demand, meaning overcooked or, even worse, undercooked or raw kebab slices can be provided to a customer. This is unfortunately quite common if the meat has not been grilled sufficiently. Where there is any contamination of the kebab meat or tools and equipment used to handle the kebab this can lead to disease transmission, for example, those linked to *E. Coli and Salmonella* bacteria.

Kebab meat is known for having large quantities of fat. Since kebab is a popular fast food alternative there is a risk that people who eat kebab frequently can suffer from heart and circulatory diseases, overweight, and other sicknesses which are connected with a high intake of animal fats. Any process which results in a reduction in unhealthful aspects of kebab would be an improvement in the art.

The conclusion is that the previously-known technique for producing short, thin, and narrow kebab slices is not suitable for large scale and hygienic production of well carved kebab slices with low levels of fat.

### Summary of the Invention

The present invention addresses the problems and shortcomings related to known techniques by providing a new process for large-scale automated production of packaged frozen thin kebab slices according to claim 1.

There has been a long-held belief in the art that it is impossible to produce large quantities of frozen kebab slices with help from an entirely automated process from beginning to end. This view has prevailed despite the fact that such a process can offer significant improvements.

For the first time a process for automated large scale production (600 - 1000 kg per hour) of short (4 - 20 cm), thin (0.3 - 1.9 mm) and narrow (2 - 5 cm) kebab slices has now been developed. To overcome the previously-mentioned disadvantages the present invention provides a method to effectively and automatically produce kebab slices which have a similar taste, shape, and appearance as kebab slices produced in the conventional way. The kebab slices which are produced have largely the same shape and weight since the method has high reproducibility due to the entirely automatic process. Additionally the fat content is considerably lower in the product produced according to the invention since excessive fat is blown away after grilling of the kebab slices. The life length of the product which is produced according to the process is high since the kebab slices are frozen directly after grilling and then they are packaged in a vacuum or modified atmosphere. To ensure metal objects have not unfortunately ended up in the kebab slices a metal detector is used before the packaged products are control weighed.

The preferred machines for performing the present invention comprise a novel combination of multiple units, some of which have been specially designed for the inventive process. A skilled person within the field of kebabs would never have been able to combine the machines since they come from different areas of technology and perform different functions than those which have been described in the present invention. Additionally, separate solutions for technical problems have been used to develop an entirely new process for hygienic production of kebab slices and said process differs significantly from that which is known from before with regard to the purpose, technical solutions, technical character, technical characteristics and technical advantages.

In brief, the process relies on a combination of equipment, including: a meat grinder or mixer which receives the raw materials for the kebab, blends them, cutting or mincing as appropriate, and then spurts a kebab mixture into an extruder which produces long meat cylinders. A flattener specially designed for the process is used in the next step to flatten the meat cylinders to long and thin kebab slices. The slices are grilled and cut to shorter slices by a computer programmed knife. During or immediately after grilling excessive fat is removed, for example blown away, in order to provide a product with a fat content lower than in traditional kebab slices. The cut slices are directed to a freezing tunnel which cools down the product so it can then be packaged by a packaging means. The packaged product passes a metal detector which can identify packages with traces of metal objects, which can then be discarded. In the final step the package is control weighed to ensure the package contain the desired amount of kebab slices.

As used herein, "meat" is intended to be interpreted generally as a meat or meat-like base for a kebab product. It is common in the art to use pieces or mince from lamb and beef; however, game, pork, poultry, fish, or other animal proteins may be used in part or whole, providing not only a different taste and texture but also potentially beneficial fat reduction in the final product. The term also includes soy and other vegetable products which can form a part or the whole of the starting material.

Terms defining orientation and configuration, such as "parallel" and "cross-section" are to be interpreted generally. As the invention relates to food products a skilled person will appreciate that there are naturally-occurring variations which will affect the behaviour and performance of the product. These terms are thus provided as guidance for performing the invention and not as limitations.

The term "frozen" is used broadly herein to designate temperatures state below standard refrigeration temperatures. Depending on the means of storage and the intended duration of storage, the temperature may be as high as approximately 0°C or as low as approximately minus 70 °C. Present technology suggests that temperatures lower than minus 70 °C may result in damage to the product, however, such temperatures could be employed provided that they sufficiently protect the product.

### Brief Description of the Drawing Figure

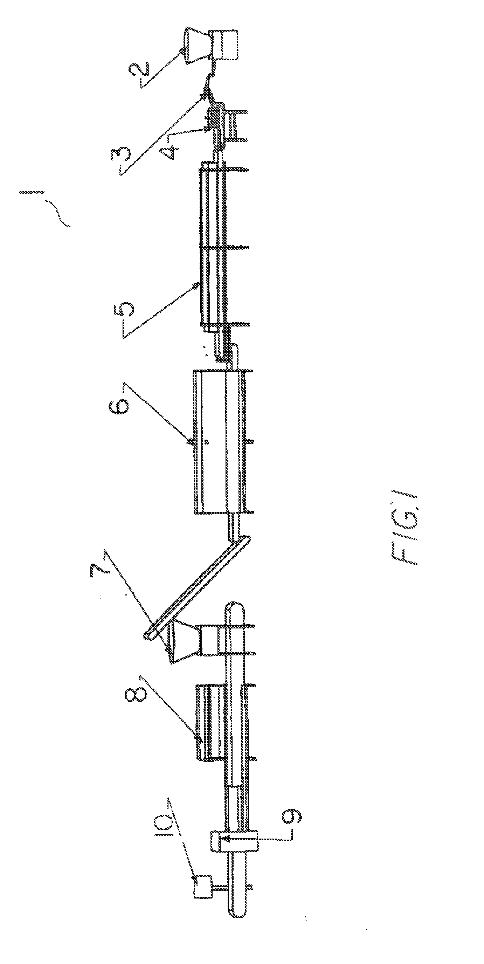

Figure 1 is a schematic illustration of one embodiment of the invention.

### Detailed Description of the Invention

A blend of minced meat and flavourings/additives are placed in a meat grinder (Handtmann VF 300) which allows a hygienic, fast and large scale production. For example, where 600 - 1000 kg per hour of homogenously-blended kebab mixture can be pumped further. The flavourings/additives may include for example salt, kebab spices (Nordfalk), black pepper, water, nut protein and potato flour. The starting materials may be chilled.

The meat grinder is used to blend the mixture and optionally to chop or mince the meat component. Skilled persons will appreciate that in some applications it may be beneficial to operate the grinder under a vacuum. The kebab mixture is then further pumped to an extruder (Kebco Extruder). An extruder has been developed specifically for the present invention and a skilled person will appreciate how to reproduce such an extruder, including the fact that the extruder may be used to equalise pressure in the mixture. The extruder is a machine which forms the kebab mixture by pressing it through one or more small openings, for example circles (5 - 12 mm in diameter). Where a plurality of openings are employed the extruded material will be present in parallel forms. Kebab mixture which is extruded through multiple circular openings results in meat cylinders which have the same cross-sectional surface along their entire length.

The meat cylinders are supplied to a flattener (Kebco flattener) which has been developed specifically for the present invention. Skilled persons reproducing the present invention will ensure that their flattener can achieve high production capacity and reproducibility of the thickness and width of the kebab slices. In one embodiment, the flattener comprises two belts where each belt is driven by two rotating rollers. The belts preferably comprise a non-stick coating such as TEFLON (DuPont). When the upper belt has a higher temperature than the lower belt the flattened meat cylinders release the higher belt before they are transferred to a grill. The distance between the flattener belts can vary but the preferred setting produces slices with a thickness of 0.3 - 1.9 mm which is the optimal thickness for kebab slices. Ideally the flattener can be adjusted to produce slices which are 0.2 - 4.9 mm thick. The preferred width for kebab slices is 2.5 - 3.5 cm but the flattener can be adjusted to produce kebab slices which are 1 - 5 cm wide.

The flatteners' belts pass the long flattened kebab slices to a grill. In this embodiment, the grill heats using infrared (IR) energy and comprises a rolling metal belt where the kebab slices are grilled at 150-300 degrees C. The grill is designed for grilling large volumes of kebab slices and it is set to optimal temperature and rolling speed for warming thin kebab slices.

During or after grilling excessive fat on the kebab slices can be removed or reduced. In the present embodiment liquid fat is blown away by a tube directed toward the kebab slices and connected at an opposite end to a pump. The pump supplies ambient air and has an adjustable capacity to achieve the desired, e.g. maximal, removal of the fats which are brought to the kebab slice surface during the grilling. This technical feature can be of particular importance for applications where reduced fat kebab slices are desired; the kebab slices become healthier animal fats are removed.

A computer programmed automatic knife can be used to carve the long kebab slices to shorter slices with a length of 3 - 20 cm.

The chopped kebab slices are further passed to a freezing unit. For example, a freezing tunnel (AGA Merlin Freeze) with high capacity which freezes product quickly thus retaining the quality and the shape of the product and minimising weight loss. This technical feature helps ensure that the customer receives a product which both tastes good and looks good.

A weighing unit such as a multihead scale (Scanvaegt Scancombinator 5414) with a weighing capacity of 120 portions per minute handles weighing of the frozen kebab slices in the next step. After the weighing the desired amount of kebab slices are removed to a multi packing module (Multivac R7000) with a capacity of 10 - 40 portions per minute, which packs the weighed kebab slices under vacuum in order to protect the product's taste and to help prevent contamination. In the next step in the process a metal detector (Scanvaegt Metal detector DSP IP) identifies products contaminated with metal. In the present embodiment the metal detector is provided with means to remove or otherwise sort out any product identified as contaminated with metal. A final weighing step, using for example a scale (Scanvaegt ScanCheck RF5) of the packaged kebab slices helps ensure that each package contains the correct weight of product.

Referring to the embodiment depicted in Fig. 1, an arrangement 1 of equipment for performing the inventive process can comprise a grinder 2, an extruder 3, a flattener 4, a grill 5, a freezing unit 6, a weighing unit 7, a packing module 8, a metal detector 9, and a scale 10. Of course practice of the present inventive process is not limited to such an arrangement, alternatives being apparent to skilled persons. For example, a means for removing fat comprising a tube and a pump is incorporated in the grill in the embodiment shown in Fig. 1, whereas other embodiments could provide a separate unit between grill 5 and freezer 6 to accomplish fat reduction or removal.

### Examples

### Example 1

The process is used to product short (4 - 20 cm), thin (0.3 - 1.9 mm) and narrow (2 - 5 cm) kebab slices with beef and a standard kebab spice and flavouring mixture. The following kebab slices with the different measurements were produced by adjusting the flattener and the computer programmed knife:
1. Thickness: 3.1 - 4.0 mm / Width 2.5 - 3.5 cm / Length 4 - 20 cm
2. Thickness: 2.1 - 3.0 mm / Width 3.5 cm / Length 4 - 20 cm
3. Thickness: 1.1 - 2.0 mm / Width 2.5 - 3.5 cm / Length 4 - 20 cm
4. Thickness: 0.5 - 1.0 mm / Width 3.0 cm / Length 4 - 20 cm

A 10 person panel evaluated products 1-4 for taste and shape. The survey showed that product number 4 was that most appreciated by the panel.

### Example 2

The process is used to product short (4 - 20 cm), thin (0.3 - 1.9 mm) and narrow (2 - 5 cm) kebab slices with lamb and a standard kebab spice and flavouring mixture. The following kebab slices with the different measurements were produced by adjusting the flattener and the computer programmed knife:
1. Thickness: 3.1 - 4.0 mm / Width 2.5 - 3.5 cm / Length 4 - 20 cm
2. Thickness: 2.1 - 3.0 mm / Width 3.5 cm / Length 4 - 20 cm
3. Thickness: 1.1 - 2.0 mm / Width 2.5 - 3.5 cm / Length 4 - 20 cm
4. Thickness: 0.5 - 1.0 mm / Width 3.0 cm / Length 4 - 20 cm

A 10 person panel evaluated products 1-4 for taste and shape. The survey showed that product number 4 was that most appreciated by the panel.

### Example 3

The process is used to product short (4 - 20 cm), thin (0.3 - 1.9 mm) and narrow (2 - 5 cm) kebab slices with pork and a standard kebab spice and flavouring mixture. The following kebab slices with the different measurements were produced by adjusting the flattener and the computer programmed knife:
1. Thickness: 3.1 - 4.0 mm / Width 2.5 - 3.5 cm / Length 4 - 20 cm
2. Thickness: 2.1 - 3.0 mm / Width 3.5 cm / Length 4 - 20 cm
3. Thickness: 1.1 - 2.0 mm / Width 2.5 - 3.5 cm / Length 4 - 20 cm
4. Thickness: 0.5 - 1.0 mm / Width 3.0 cm / Length 4 - 20 cm

A 10 person panel evaluated products 1-4 for taste and shape. The survey showed that product number 4 was that most appreciated by the panel.

### Example 4

The process is used to product short (4 - 20 cm), thin (0.3 - 1.9 mm) and narrow (2 - 5 cm) kebab slices with soy and a standard kebab spice and flavouring mixture. The following kebab slices with the different measurements were produced by adjusting the flattener and the computer programmed knife:
1. Thickness: 3.1 - 4.0 mm / Width 2.5 - 3.5 cm / Length 4 - 20 cm
2. Thickness: 2.1 - 3.0 mm / Width 3.5 cm / Length 4 - 20 cm
3. Thickness: 1.1 - 2.0 mm / Width 2.5 - 3.5 cm / Length 4 - 20 cm
4. Thickness: 0.5 - 1.0 mm / Width 3.0 cm / Length 4 - 20 cm

A 10 person panel evaluated products 1-4 for taste and shape. The survey showed that product number 4 was that most appreciated by the panel.

While certain preferred aspects of embodiments of the inventive process and machines for achieving the same have been described herein, these are provided by way of example only, and many variations and modifications on such embodiments will be apparent to the skilled person and fall within the scope of the present invention, which is defined by the appended claims.

## Claims

1. Process for large-scale automated production, 500-2000 kg per hour, of frozen and packaged thin kebab slices comprising the following steps:
i. that a meat mixture is fed into a meat grinder which pumps the meat mixture to an extruder that equalises the pressure and presses the meat mixture out through a plurality of small parallel holes,
ii. that a plurality of long meat cylinders, with the same cross-sectional surface along the entire length, are obtained after the extruding step,
iii. that said meat cylinders are provided to a flattening system which comprises an upper and a lower Teflon belt,
iv. that said flattening system presses the meat cylinders to thin long kebab slices,
v. that said kebab slices are provided to an infrared grill where the slices are grilled at 150-300 °C,
vi. that fat is blown away from the grilled kebab slices,
vii. that the grilled kebab slices are cut into shorter slices, with a length of 4-20 cm, by a knife system,
viii. that said short kebab slices are provided to a freezing tunnel which has a temperature of minus 2-40 °C,
ix. that the frozen kebab slices are provided to a scale which weighs the kebab slices to a determined weight,
x. that the weighed slices are packaged by a packaging machine under vacuum or modified atmosphere.
xi. that the packaged kebab slices pass a metal detector which distinguishes packaged meat from metal objects,
xii. that the distinguished packaged kebab slices which do not contain metal objects are provided to a control scale to determine that that package contains the correct amount of sliced kebab.

2. Process according to claim 1 **characterised in, that** said meat mixture comprises mince of beef, lamb, chicken, pork or soy, as well as salt, kebab spices, black pepper, water, nut protein and potato flour.

3. Process according to claim 1 or 2 **characterised in, that** said holes which the meat mixture is pressed through have a diameter of 5-12 mm.

4. Process according to any one of claims 1-3, **characterised in, that** the flattening system presses the meat cylinders to a thickness of 0.3 - 1.9 mm and a width of 2-5 cm.

## Patentansprüche

1. Verfahren zur automatisierten Massenherstellung, 500 bis 2000 kg pro Stunde, von gefrorenen und abgepackten dünnen Kebabscheiben, umfassend die folgenden Schritte:
i. Einspeisen einer Fleischmischung in einen Fleischwolf, Pumpen der Fleischmischung zu einer Strangpresse, die den Druck ausgleicht und die Fleischmischung durch mehrere kleine parallele Löcher nach außen drückt,
ii. Erhalten von mehreren langen Fleischzylindern mit der gleichen Querschnittsoberfläche entlang ihrer gesamten Länge nach dem Strangpressschritt,
iii. Bereitstellen der Fleischzylinder an ein Abflachungssystem, das ein oberes und ein unteres Teflonband umfasst,
iv. Pressen der Fleischzylinder mit dem Abflachungssystem zu dünnen, langen Kebabscheiben,
v. Bereitstellen der Kebabscheiben an einen Infrarotgrill, in dem die Scheiben bei 150 bis 300 °C gegrillt werden,
vi. Wegblasen von Fett von den gegrillten Kebabscheiben,
vii. Schneiden der gegrillten Kebabscheiben mithilfe eines Messersystems in kürzere Scheiben mit einer Länge von 4 bis 20 cm,
viii. Bereitstellen der kurzen Kebabscheiben an einen Gefriertunnel, der eine Temperatur von minus 2 bis minus 40 °C aufweist,
ix. Bereitstellen der gefrorenen Kebabscheiben an eine Waage, welche die Kebabscheiben bis zu einem bestimmten Gewicht wiegt,
x. Verpacken der abgewogenen Scheiben durch eine Verpackungsmaschine unter Vakuum oder unter Schutzatmosphäre,
xi. Leiten der verpackten Kebabscheiben durch einen Metalldetektor, der verpacktes Fleisch von Metallobjekten unterscheidet,
xii. Bereitstellen der unterschiedenen verpackten Kebabscheiben, die keine Metallobjekte enthalten, an eine Kontrollwaage, um zu bestimmen, dass diejenige Verpackung die richtige Menge an Kebabscheiben enthält.

2. Verfahren nach Anspruch 1, **dadurch gekennzeichnet, dass** die Fleischmischung Rinder-, Lamm-, Hähnchen-, Schweine- oder Sojahackfleisch umfasst, sowie Salz, Kebabgewürze, schwarzen Pfeffer, Nussprotein und Kartoffelmehl.

3. Verfahren nach Anspruch 1 oder 2, **dadurch gekennzeichnet, dass** die Löcher, durch welche die Fleischmischung gedrückt wird, einen Durchmesser von 5 bis 12 mm aufweisen.

4. Verfahren nach einem der Ansprüche 1 bis 3, **dadurch gekennzeichnet, dass** das Abflachungssystem die Fleischzylinder zu einer Dicke von 0,3 bis 1,9 mm und einer Breite von 2 bis 5 cm presst.

## Revendications

1. Procédé de production automatisée à grande échelle, à savoir 500 à 2000 kg par heure, de fines tranches de kebab congelées et emballées comprenant les étapes suivantes :
i. un mélange de viande est introduit dans un hachoir à viande qui pompe le mélange de viande jusqu'à une extrudeuse qui égalise la pression et presse le mélange de viande à travers une pluralité de petits trous parallèles,
ii. une pluralité de longs cylindres de viande, présentant la même surface en section transversale sur toute la longueur, sont obtenus suite à l'étape d'extrusion,
iii. lesdits cylindres de viande sont transférés à un système d'aplatissement qui comprend des courroies supérieure et inférieure en Téflon,
iv. ledit système d'aplatissement presse les cylindres de viande de façon à former de longues et fines tranches de kebab,
v. lesdites tranches de kebab sont transférées à un gril à infrarouge au niveau duquel les tranches sont grillées à 150 à 300 °C,
vi. la graisse est expulsée des tranches de kebab grillées,
vii. les tranches de kebab grillées sont coupées en tranches plus courtes, d'une longueur de 4 à 20 cm, par un système de couteau,
viii. lesdites courtes tranches de kebab sont transférées à un tunnel de congélation qui présente une température de -2 à -40 °C,
ix. les tranches de kebab congelées sont transférées à une balance qui pèse les tranches de kebab jusqu'à l'obtention d'un poids déterminé,
x. les tranches pesées sont emballées par une machine d'emballage sous vide ou atmosphère modifiée,
xi. les tranches de kebab emballées passent par un détecteur de métaux qui distingue la viande emballée de tout objet métallique,
xii. les tranches de kebab emballées distinguées qui ne contiennent pas d'objets métalliques sont transférées à une balance de contrôle afin de déterminer que ce paquet contient la quantité correcte de kebab en tranches.

2. Procédé selon la revendication 1, **caractérisé en ce que** ledit mélange de viande comprend du hachis de boeuf, d'agneau, de poulet, de porc ou de soja, ainsi que du sel, des épices pour kebab, du poivre noir, de l'eau, des protéines de noix et de la farine de pomme de terre.

3. Procédé selon la revendication 1 ou 2, **caractérisé en ce que** lesdits trous à travers lesquels est pressé le mélange de viande présentent un diamètre de 5 à 12 mm.

4. Procédé selon l'une quelconque des revendications 1 à 3, **caractérisé en ce que** le système d'aplatissement presse les cylindres de viande jusqu'à une épaisseur de 0,3 à 1,9 mm et une largeur de 2 à 5 cm.
